(19) Europäisches Patentamt European Patent Office Office européen des brevets

(11) **EP 4 760 210 A1**

(12) **EUROPEAN PATENT APPLICATION**

(43) Date of publication:
**17.06.2026  Bulletin 2026/25**

(21) Application number: **25220743.6**

(22) Date of filing: **04.12.2025**

(51) International Patent Classification (IPC):
**G01C 21/30** (2006.01)    **G01C 21/36** (2006.01)
**G06V 20/56** (2022.01)

(52) Cooperative Patent Classification (CPC):
**G01C 21/3658; G01C 21/30; G01C 21/3602;
G06V 20/588**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **10.12.2024  CN 202411814391**

(71) Applicant: **Beijing Baidu Netcom
Science Technology Co., Ltd.
Beijing 100085 (CN)**

(72) Inventors:
• **LU, Manman**
  **Beijing, 100085 (CN)**
• **LI, Hao**
  **Beijing, 100085 (CN)**
• **SHI, Nan**
  **Beijing, 100085 (CN)**

(74) Representative: **Isarpatent
Patent- und Rechtsanwälte PartG mbB
Friedrichstraße 31
80801 München (DE)**

(54) **LANE-LEVEL POSITIONING METHOD, APPARATUS, AND STORAGE MEDIUM**

(57)    The present disclosure provides a lane-level positioning method and apparatus, a device, a vehicle, and a medium, and relates to the field of computer technologies and specifically to the technical fields such as artificial intelligence, computer vision, intelligent vehicles, and autonomous vehicles. The method includes: obtaining map road information and visual perception road information of surroundings of a vehicle based on positioning information of the vehicle; determining a plurality of candidate lanes based on the positioning information; determining a topological recursion probability of the vehicle being in each of the candidate lanes by utilizing the map road information; determining a perception observation probability of the vehicle being in each of the candidate lanes by utilizing the visual perception road information; determining a positioning probability of the vehicle being in each of the candidate lanes by utilizing the positioning information; and determining a target lane the vehicle is in from the plurality of candidate lanes based on the topological recursion probability, the perception observation probability, and the positioning probability of the vehicle being in each of the candidate lanes.

Obtain map road information and visual perception road information of surroundings of a vehicle based on positioning information of the vehicle — S201

Determine a plurality of candidate lanes based on the positioning information — S202

Determine a topological recursion probability of the vehicle being in each of the candidate lanes by utilizing the map road information — S203

Determine a perception observation probability of the vehicle being in each of the candidate lanes by utilizing the visual perception road information — S204

Determine a positioning probability of the vehicle being in each of the candidate lanes by utilizing the positioning information — S205

Determine a target lane the vehicle is in from the plurality of candidate lanes based on the topological recursion probability, the perception observation probability, and the positioning probability of the vehicle being in each of the candidate lanes — S206

FIG. 2

**Description**

**TECHNICAL FIELD**

The present disclosure relates to the field of computer technologies and specifically to the technical fields such as artificial intelligence, computer vision, intelligent vehicles, and autonomous vehicles, and in particular relates to a lane-level positioning method, a lane-level positioning apparatus, an electronic device, a vehicle, a computer-readable storage medium, and a computer program product.

**BACKGROUND**

Assisted driving technology, due to its broad application prospects, has received extensive attention in recent years in the industry, especially in the automotive sector, and has received in-depth research and exploration. Assisted driving technology is a concentrated embodiment of current automation and intelligent technologies, integrated from a large number of advanced technologies. Lane-level positioning technology is an indispensable component of assisted driving technology, playing a pivotal role and directly affecting the reliability and safety of subsequent decision-making and control.

Methods described in this section are not necessarily methods that have been previously conceived or employed. It should not be assumed that any of the methods described in this section is considered to be prior art just because they are included in this section, unless otherwise indicated expressly. Similarly, the problem mentioned in this section should not be considered to be universally recognized in any prior art, unless otherwise indicated expressly.

**SUMMARY**

The present disclosure provides a lane-level positioning method, a lane-level positioning apparatus, an electronic device, a vehicle, a computer-readable storage medium, and a computer program product.

According to an aspect of the present disclosure, a computer-implemented lane-level positioning method is provided. The method includes: obtaining map road information and visual perception road information of surroundings of a vehicle based on positioning information of the vehicle; determining a plurality of candidate lanes based on the positioning information; determining a topological recursion probability of the vehicle being in each of the candidate lanes by utilizing the map road information; determining a perception observation probability of the vehicle being in each of the candidate lanes by utilizing the visual perception road information; determining a positioning probability of the vehicle being in each of the candidate lanes by utilizing the positioning information; and determining a target lane the vehicle is in from the plurality of candidate lanes based on the topological recursion probability, the perception observation probability, and the positioning probability of the vehicle being in each of the candidate lanes.

According to another aspect of the present disclosure, a lane-level positioning apparatus is provided. The apparatus includes: an obtaining unit configured to obtain map road information and visual perception road information of surroundings of a vehicle based on positioning information of the vehicle; a candidate lane determination unit configured to determine a plurality of candidate lanes based on the positioning information; a topological recursion probability determination unit configured to determine a topological recursion probability of the vehicle being in each of the candidate lanes by utilizing the map road information; a perception observation probability determination unit configured to determine a perception observation probability of the vehicle being in each of the candidate lanes by utilizing the visual perception road information; a positioning probability determination unit configured to determine a positioning probability of the vehicle being in each of the candidate lanes by utilizing the positioning information; and a first target lane determination unit configured to determine a target lane the vehicle is in from the plurality of candidate lanes based on the topological recursion probability, the perception observation probability, and the positioning probability of the vehicle being in each of the candidate lanes.

According to another aspect of the present disclosure, an electronic device is provided. The electronic device includes: at least one processor; and a memory communicatively connected to the at least one processor, where the memory stores instructions executable by the at least one processor, and the instructions, when executed by the at least one processor, cause the at least one processor to perform the method described above.

According to another aspect of the present disclosure, a vehicle is provided. The vehicle includes the electronic device described above.

According to another aspect of the present disclosure, a non-transitory computer-readable storage medium storing computer instructions is provided, where the computer instructions are used to cause a computer to perform the method described above.

According to another aspect of the present disclosure, there is provided a computer program product, including a computer program, where the computer program, when executed by a processor, causes the method described above to be implemented.

According to one or more embodiments of the present disclosure, the present disclosure achieves more accurate lane-level positioning by obtaining the map road information and the visual perception road information of surroundings of the vehicle based on the positioning information of the vehicle, determining the plurality of candidate lanes, then determining the probabilities of the vehicle being in each of the candidate lanes in three dimensions by utilizing the map road information, the visual perception road information, and the positioning information, respectively, and finally determining the target lane the vehicle is in based on these probabilities.

It should be understood that the content described in this section is not intended to identify critical or important features of the embodiments of the present disclosure, and is not intended to limit the scope of the present disclosure. Other features of the present disclosure will be readily understood with reference to the following description.

## BRIEF DESCRIPTIONS OF THE DRAWINGS

The accompanying drawings show example embodiments and form a part of the specification, and are used to explain example implementations of the embodiments together with the written description of the specification. The embodiments shown are merely for illustrative purposes and do not limit the scope of the claims. Throughout the accompanying drawings, the same reference numerals denote similar but not necessarily same elements.

FIG. 1 is a schematic diagram of an example system in which various methods described herein can be implemented according to an embodiment of the present disclosure;

FIG. 2 is a flowchart of a lane-level positioning method according to an example embodiment of the present disclosure;

FIG. 3 is a flowchart of determining a topological recursion probability of a vehicle being in each candidate lane by utilizing map road information according to an example embodiment of the present disclosure;

FIG. 4 is a schematic diagram of a filtering process according to an example embodiment of the present disclosure;

FIG. 5 is a flowchart of determining a perception observation probability of a vehicle being in each candidate lane by utilizing visual perception road information according to an example embodiment of the present disclosure;

FIG. 6 is a flowchart of determining a positioning probability of a vehicle being in each candidate lane by utilizing positioning information according to an example embodiment of the present disclosure;

FIG. 7 is a flowchart of determining a target lane a vehicle is in from a plurality of candidate lanes according to an example embodiment of the present disclosure;

FIG. 8 is a flowchart of determining a topological recursion weight, a perception observation weight, and a positioning weight of each of a plurality of candidate lanes according to an example embodiment of the present disclosure;

FIG. 9 is a schematic diagram of a hidden Markov model according to an example embodiment of the present disclosure;

FIG. 10 is a flowchart of a lane-level positioning method according to an example embodiment of the present disclosure;

FIG. 11 is a flowchart of an overall technical process according to an example embodiment of the present disclosure;

FIG. 12 is a schematic diagram of lane-level positioning according to an example embodiment of the present disclosure;

FIG. 13 is a structural block diagram of a lane-level positioning apparatus according to an example embodiment of the present disclosure; and

FIG. 14 is a structural block diagram of an example electronic device that can be used to implement an embodiment of the present disclosure.

## DETAILED DESCRIPTION

Example embodiments of the present disclosure are described below in conjunction with the accompanying drawings, where various details of the embodiments of the present disclosure are included to facilitate understanding, and should only be considered as exemplary. Therefore, those of ordinary skill in the art should be aware that various changes and modifications can be made to the embodiments described here, without departing from the scope of the present disclosure. Likewise, for clarity and conciseness, the description of well-known functions and structures is omitted in the following description.

In the present disclosure, unless otherwise stated, the terms "first", "second", etc., used to describe various elements are not intended to limit the positional, temporal or importance relationship of these elements, but rather only to distinguish one component from another. In some examples, a first element and a second element may refer to a same instance of the element, and in some cases, based on contextual descriptions, the first element and the second element may also refer to different instances.

The terms used in the description of the various examples in the present disclosure are merely for the purpose of describing particular examples, and are not intended to be limiting. If the number of elements is not specifically defined, there may be one or more elements, unless otherwise expressly indicated in the context. Moreover, the term "and/or" used in the present disclosure encompasses any of and all possible combinations of the listed terms.

In related technologies, the existing lane-level positioning has low accuracy.

In order to solve the above problem, the present disclosure achieves more accurate lane-level positioning by obtaining map road information and visual perception road information of surroundings of a vehicle based on positioning information of the vehicle, determining a plurality of candidate lanes, then determining probabilities of the vehicle being in each of the candidate lanes in three dimensions by utilizing the map road information, the visual perception road information, and the positioning information, respectively, and finally determining a target lane the vehicle is in based on these probabilities.

The embodiments of the present disclosure will be described below in detail with reference to the accompanying drawings.

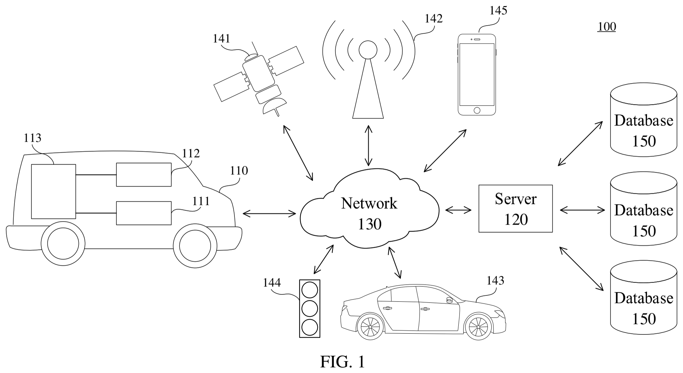

FIG. 1 is a schematic diagram of an example system 100 in which various methods and apparatuses described herein can be implemented according to an embodiment of the present disclosure. Referring to FIG. 1, the system 100 includes a motor vehicle 110, a server 120, and one or more communication networks 130 that couple the motor vehicle 110 to the server 120.

In this embodiment of the present disclosure, the motor vehicle 110 may include a computing device according to the embodiments of the present disclosure and/or may be configured to perform a method according to the embodiments of the present disclosure.

The server 120 can run one or more services or software applications for a lane-level positioning method. In some embodiments, the server 120 may further provide other services or software applications that may include a non-virtual environment and a virtual environment. In the configuration shown in FIG. 1, the server 120 may include one or more components that implement functions performed by the server 120. These components may include software components, hardware components, or a combination thereof that can be executed by one or more processors. A user of the motor vehicle 110 may sequentially use one or more client applications to interact with the server 120, thereby utilizing the services provided by these components. It should be understood that various different system configurations are possible, and may be different from that of the system 100. Therefore, FIG. 1 is an example of the system for implementing various methods described herein, and is not intended to be limiting.

The server 120 may include one or more general-purpose computers, a dedicated server computer (for example, a personal computer (PC) server, a UNIX server, or a terminal server), a blade server, a mainframe computer, a server cluster, or any other suitable arrangement and/or combination. The server 120 may include one or more virtual machines running a virtual operating system, or other computing architectures related to virtualization (e.g., one or more flexible pools of logical storage devices that can be virtualized to maintain virtual storage devices of a server). In various embodiments, the server 120 can run one or more services or software applications that provide functions described below.

A computing unit in the server 120 can run one or more operating systems including any one of the above-mentioned operating systems and any commercially available server operating system. The server 120 can also run any one of various additional server applications and/or middle-tier applications, including an HTTP server, an FTP server, a CGI server, a JAVA server, a database server, etc.

In some implementations, the server 120 may include one or more applications to analyze and merge data feeds and/or event updates received from the motor vehicle 110. The server 120 may further include one or more applications to display the data feeds and/or real-time events via one or more display devices of the motor vehicle 110.

The network 130 may be any type of network well known to those skilled in the art, and may use any one of a plurality of available protocols (including but not limited to TCP/IP, SNA, IPX, etc.) to support data communication. As a mere example, the one or more networks 130 may be a satellite communication network, a local area network (LAN), an Ethernet-based network, a token ring, a wide area network (WAN), the Internet, a virtual network, a virtual private network (VPN), an intranet, an extranet, a blockchain network, a public switched telephone network (PSTN), an infrared network, a wireless network (such as Bluetooth or Wi-Fi), and/or any combination of these and other networks.

The system 100 may further include one or more databases 150. In some embodiments, these databases can be used to store data and other information. For example, one or more of the databases 150 can be configured to store information such as an audio file and a video file. The data repository 150 may reside at various locations. For example, a data repository used by the server 120 may be locally in the server 120, or may be remote from the server 120 and may communicate with the server 120 via a network-based or dedicated connection. The data repository 150 may be of different types. In some embodiments, the data repository used by the server 120 may be a database, such as a relational database. One or more of these databases can store, update, and retrieve data from or to the database, in response to a command.

In some embodiments, one or more of the databases 150 may further be used by an application to store application data. The database used by the application may be of different types, for example, may be a key-value repository, an object repository, or a regular repository backed by a file system.

The motor vehicle 110 may include a sensor 111 for sensing surroundings. The sensor 111 may include one or more of the following sensors: a visual camera, an infrared camera, an ultrasonic sensor, a millimeter-wave radar, and a lidar (LiDAR). Different sensors can provide different detection precision and ranges. Cameras can be mounted in the front of, at the back of, or at other locations of the vehicle. Visual cameras can capture the situation inside and outside the vehicle in real time and present it to the driver and/or passengers. In addition, by analyzing the image captured by the visual cameras, information such as indications of traffic lights, conditions of crossroads, and operating conditions of other vehicles can be obtained. Infrared cameras can capture objects in night vision. Ultrasonic sensors can be mounted around the vehicle to measure the distances between objects outside the vehicle and the vehicle by utilizing characteristics such as the strong ultrasonic directivity. Millimeter-wave radars can be mounted in the front of, at the back of, or at other locations of the vehicle to measure the distances between objects outside the vehicle and the vehicle by utilizing characteristics of electromagnetic waves. Lidars can be mounted in the front of, at the back of, or at other locations of the vehicle to detect edge and shape information of objects, so as to perform object recognition and tracking. Due to the Doppler effect, the radar apparatuses can also measure the velocity changes of vehicles and moving objects.

The motor vehicle 110 may further include a communication apparatus 112. The communication apparatus 112 may include a satellite positioning module that can receive satellite positioning signals (for example, BeiDou, GPS, GLONASS, and GALILEO) from a satellite 141 and generate coordinates based on the signals. The communication apparatus 112 may further include a module for communicating with a mobile communication base station 142. The mobile communication network can implement any suitable communication technology, such as GSM/GPRS, CDMA, LTE, and other current or developing wireless communication technologies (such as 5G technology). The communication apparatus 112 may further have an Internet of Vehicles or vehicle-to-everything (V2X) module, which is configured to implement communication between the vehicle and the outside world, for example, vehicle-to-vehicle (V2V) communication with other vehicles 143 and vehicle-to-infrastructure (V2I) communication with infrastructures 144. In addition, the communication apparatus 112 may further have a module configured to communicate with a user terminal 145 (including but not limited to a smartphone, a tablet computer, or a wearable apparatus such as a watch) by using a wireless local area network or Bluetooth of the IEEE 802.11 standards. With the communication apparatus 112, the motor vehicle 110 may further access the server 120 via the network 130.

The motor vehicle 110 may further include a control apparatus 113. The control apparatus 113 may include a processor that communicates with various types of computer-readable storage apparatuses or media, such as a central processing unit (CPU) or a graphics processing unit (GPU), or other dedicated processors. The control apparatus 113 may include an autonomous driving system for automatically controlling various actuators in the vehicle. The autonomous driving system is configured to control a powertrain, a steering system, a braking system, and the like (not shown) of the motor vehicle 110 via a plurality of actuators in response to inputs from a plurality of sensors 111 or other input devices to control acceleration, steering, and braking, respectively, with no human intervention or limited human intervention. Part of the processing functions of the control apparatus 113 can be implemented by cloud computing. For example, a vehicle-mounted processor may be used to perform some processing, while cloud computing resources may be used to perform other processing. The control apparatus 113 may be configured to perform the lane-level positioning method according to the present disclosure. In addition, the control apparatus 113 may be implemented as an example of a computing device of the motor vehicle (client) according to the present disclosure.

The system 100 of FIG. 1 may be configured and operated in various manners, so that the various methods and apparatuses described according to the present disclosure can be applied.

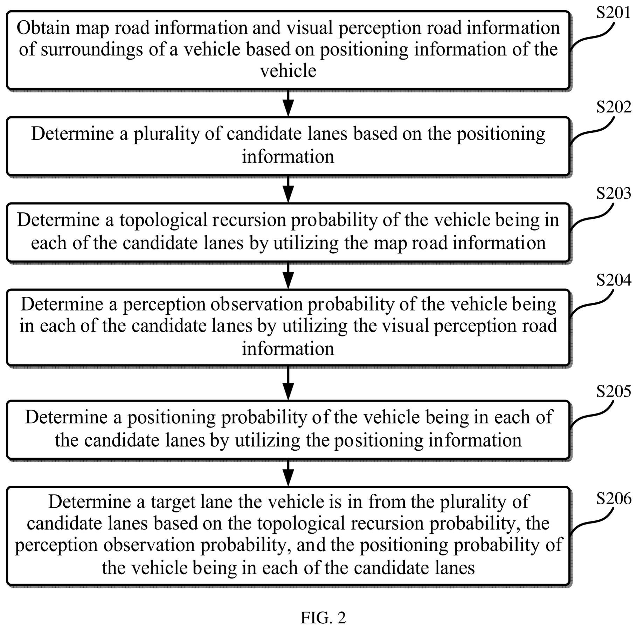

According to an aspect of the present disclosure, a lane-level positioning method is provided. As shown in FIG. 2, the lane-level positioning method includes: step S201: obtaining map road information and visual perception road information of surroundings of a vehicle based on positioning information of the vehicle; step S202: determining a plurality of candidate lanes based on the positioning information; step S203: determining a topological recursion probability of the vehicle being in each of the candidate lanes by utilizing the map road information; step S204: determining a perception observation probability of the vehicle being in each of the candidate lanes by utilizing the visual perception road information; step S205: determining a positioning probability of the vehicle being in each of the candidate lanes by utilizing the positioning information; and step S206: determining a target lane the vehicle is in from the plurality of candidate lanes based on the topological recursion probability, the perception observation probability, and the positioning probability of the vehicle being in each of the candidate lanes.

As such, the present disclosure achieves more accurate lane-level positioning by obtaining the map road information and the visual perception road information of surroundings of the vehicle based on the positioning information of the vehicle, determining the plurality of candidate lanes, then determining the probabilities of the vehicle being in each of the candidate lanes in three dimensions by utilizing the map road information, the visual perception road information, and the positioning information, respectively, and finally determining the target lane the vehicle is in based on these probabilities.

The method according to the present disclosure can be used for accurate and comprehensive lane-level positioning under poor map quality conditions.

Before step S201, the positioning information of the vehicle may be obtained.

The present disclosure involves two levels of positioning, i.e., road-level positioning and lane-level positioning. The road-level positioning obtains an approximate position of the vehicle from the vehicle's own positioning result, which may be from a positioning system, or may be a fused position obtained by using a navigation and positioning system and an inertial measurement unit. The positioning information used in step S201, step S202, and step S205 may all be a road-level positioning result. By implementing the method according to the present disclosure, a lane-level positioning result, i.e., the target lane the vehicle is in, can be obtained.

In an example embodiment, position information of the vehicle can be obtained in real time by performing fusion positioning with a Kalman filter by using the inertial measurement unit, the navigation and positioning system, a wheel speed sensor, map matching information, etc. In step S201, high-definition map data for a certain area around the position can be obtained by using the position. The obtained high-definition map data is mainly provided in the form of lanes, so that preliminary road-level positioning information can be obtained. The road-level positioning result is provided as a link identifier (ID).

In step S202, the plurality of candidate lanes may be determined in the high-definition map based on the positioning information.

In some embodiments, the map road information may include road topology information, for example, lane boundary lines and center lines of a plurality of map lanes, curbs, and predecessor/successor relationships of lanes/roads, etc.; and the visual perception road information may include lane boundary lines of a plurality of perceived lanes, curbs, and predecessor/successor relationships of perceived lanes/roads, etc. It should be noted that the candidate lanes determined in step S202 are lanes in the high-definition map.

After the plurality of candidate lanes are obtained, in step S203 to step S205, the probability of the vehicle being in each of the candidate lanes is predicted from three dimensions of topological recursion, perception observation, and positioning. Then, in step S206, the target lane the vehicle is most likely in can be determined based on these probabilities, thereby completing lane-level positioning.

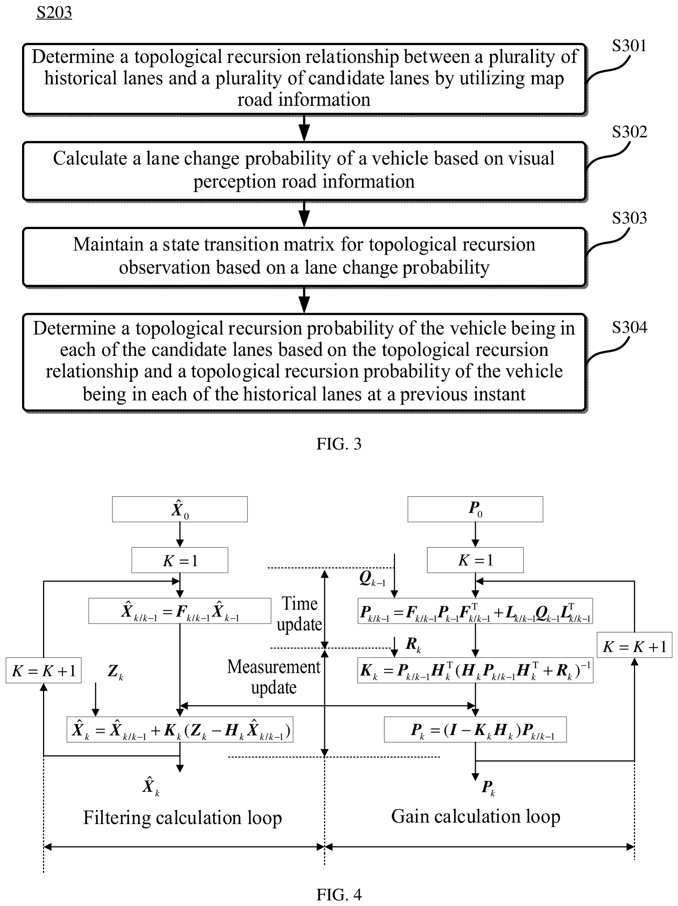

According to some embodiments, as shown in FIG. 3, step S203 of determining the topological recursion probability of the vehicle being in each of the candidate lanes by utilizing the map road information may include: step S301: determining a topological recursion relationship between a plurality of historical lanes and the plurality of candidate lanes by utilizing the map road information; and step S304: determining the topological recursion probability of the vehicle being in each of the candidate lanes based on the topological recursion relationship and a topological recursion probability of the vehicle being in each of the historical lanes at a previous instant.

As such, with the above method, the topological recursion probability of the vehicle being in each of the candidate lanes can be predicted from the dimension of lane topological recursion by effectively utilizing the map road information, thereby improving the accuracy of lane-level positioning.

In some embodiments, the topological recursion relationship may refer to predecessor/successor relationships between the plurality of historical lanes and the plurality of candidate lanes. In step S302, for each of the candidate lanes, a historical lane corresponding to the candidate lane can be determined based on the topological recursion relationship, and then the topological recursion probability of the historical lane can be determined as the topological recursion probability of the vehicle being in the candidate lane at the current instant.

According to some embodiments, as shown in FIG. 3, step S203 of determining the topological recursion probability of the vehicle being in each of the candidate lanes by utilizing the map road information may further include: step S302: calculating a lane change probability of the vehicle based on the visual perception road information; and step S303: maintaining a state transition matrix for topological recursion observation based on the lane change probability. The topological recursion probability of the vehicle being in each of the candidate lanes may be determined based on the state transition matrix, the topological recursion relationship, and the topological recursion probability of the vehicle being in each of the historical lanes at the previous instant.

As such, with the above method, a possible lane change of the vehicle can be further introduced in addition to the topological recursion relationship, thereby further improving the accuracy of lane-level positioning.

In some embodiments, the lane change probability may be calculated by using the following formula:

$$p_k = \frac{1}{lane\_size} * T * p_{k-1}$$

In the formula, $p_{k-1}$ represents a topological recursion probability of a vehicle being in each of historical lanes at a previous instant, $p_k$ represents a topological recursion probability of the vehicle being in each of candidate lanes at the current instant, $T$ represents a state transition matrix, and *lane_size* represents the number of lanes.

In some embodiments, in step S303, the lane change probability of the vehicle may be calculated based on a lateral deviation of the ego vehicle from a lane boundary line. Further, the lateral deviation may be used as an estimator in Kalman filtering for prediction and update. It is determined based on the sign (positive or negative) of the lateral deviation whether to change lanes to the left or to the right, and a corresponding lane change probability is set.

In some embodiments, Kalman filtering is applied to stationary random processes. Measurement noise and process noise sequences of a system are not signals to be filtered out. Rather, their distributions are important information to be applied in the estimation process. The signals to be processed are not distinguished between interference and useful signals. Instead, the task of filtering is to extract all the signals processed. Therefore, Kalman filtering is a method based on optimal estimation.

A discrete-time system is described as follows:

State equation:

$$X_k = F_{k|k-1}X_{k-1} + L_{k|k-1}W_{k-1}$$

Measurement equation:

$$Z_k = H_k X_k + V_k$$

In the equations, $X_k$ represents a state vector, $F_{k|k-1}$ represents a state transition matrix, $L_{k|k-1}$ represents a process noise driving matrix, $H_k$ represents a measurement matrix, and $W_{k-1}$ and $V_k$ represent process noise and measurement noise.

Meanwhile, $W_k$ and $V_k$ satisfy

$$E[W_k] = 0, Cov[W_k, W_j] = E[W_k W_k^T] = Q_k \delta_{kj}$$

$$E[V_k] = 0, Cov[V_k, V_j] = E[V_k V_k^T] = R_k \delta_{kj}$$

$$Cov[W_k, V_j] = E[W_k V_k^T] = 0$$

In the equations, $Q_k$ is a process noise matrix and is non-negative definite; $R_k$ is a measurement noise matrix and is positive definite, and it is assumed that a posterior probability distribution for each step is a normal distribution.

One-step-ahead state prediction:

In the one-step-ahead prediction, a state at an instant $k$ is predicted based on a state estimator $\hat{X}_{k-1}$ at an instant $k - 1$, i.e., a linear minimum variance of $X_k$ is estimated by utilizing $k - 1$ measurements $Z_1, Z_2, ... Z_{k-1}$. It can be derived that,

$$\hat{X}_{k|k-1} = F_{k|k-1}\hat{X}_{k-1}$$

State estimation:

The value $\hat{X}_{k|k-1}$ obtained through the one-step-ahead state prediction is corrected by using the measurement $Z_k$ obtained at the instant $k$. Using the value obtained through the one-step-ahead prediction instead of the ground truth state value $X_k$ introduces an error $\tilde{X}_{k|k-1} = X_k - \hat{X}_{k|k-1}$, leading to an estimation error $\tilde{Z}_{k|k-1} = Z_k - \hat{Z}_{k|k-1} = Z_k - H_k\hat{X}_{k|k-1} = H_k\tilde{X}_{k|k-1} + V_k$ for the measurement. In the filtering theory, this error is referred to as a residual (also referred to as an innovation). In can be seen that the residual (innovation) contains information about the error in the one-step-ahead prediction. By performing corresponding weighting on the innovation, the error in the one-step-ahead prediction can be extracted as follows:

$$\hat{X}_k = \hat{X}_{k|k-1} + K_k(Z_k - H_k\hat{X}_{k|k-1})$$

Filtering gain:

To obtain the state estimator $\hat{X}_k$ at the instant $k$, the weighting matrix $K_k$ for the innovation, which is referred to as a filtering gain matrix, needs to be obtained. The principle for obtaining the gain matrix is to minimize an estimation mean square error matrix

$P_k = E[\tilde{X}_k \tilde{X}_k^T]$, (where $\tilde{X}_k = X_k - \hat{X}_k$ is an estimation error). Thus, the recursive formula for the filtering gain matrix is as follows:

$$K_k = P_{k|k-1} H_k^T (H_k P_{k|k-1} H_k^T + R_k)^{-1}$$

One-step-ahead prediction mean square error:

According to the definition $P_{k|k-1} = E\left[\tilde{X}_{k|k-1} \tilde{X}_{k|k-1}^T\right]$, it can be derived that,

$$P_{k|k-1} = F_k P_{k|k-1} F_k^T + L_{k|k-1} Q_k L_{k|k-1}^T$$

Estimation mean square error:

According to the definition $P_k = E[\tilde{X}_k \tilde{X}_k^T]$, in connection with relevant assumptions of the above system and through a series of derivations, it can be derived that,

$$P_k = (I - K_k H_k) P_{k|k-1} (I - K_k H_k)^T + K_k R_k K_k^T$$

The five equations above constitute the process of the discrete Kalman filter. That is, given initial values $\hat{X}_0$ and $P_0$, the state estimator $\hat{X}_k$ at the instant $k$ can be derived by utilizing the measurement $k$ at the instant $Z_k$. FIG. 4 is a schematic diagram of a filtering process according to an example embodiment of the present disclosure.

The filter essentially has two phases: prediction and update. The prediction phase applies equations describing dynamic characteristics of the system to calculate a transition probability density of a predicted state from a previous instant to the current instant. Since unpredictable random noise affects state estimation, the prediction process typically requires transformation to propagate the probability distribution of the state. The update phase uses a newly obtained measurement to correct the probability distribution from the prediction phase.

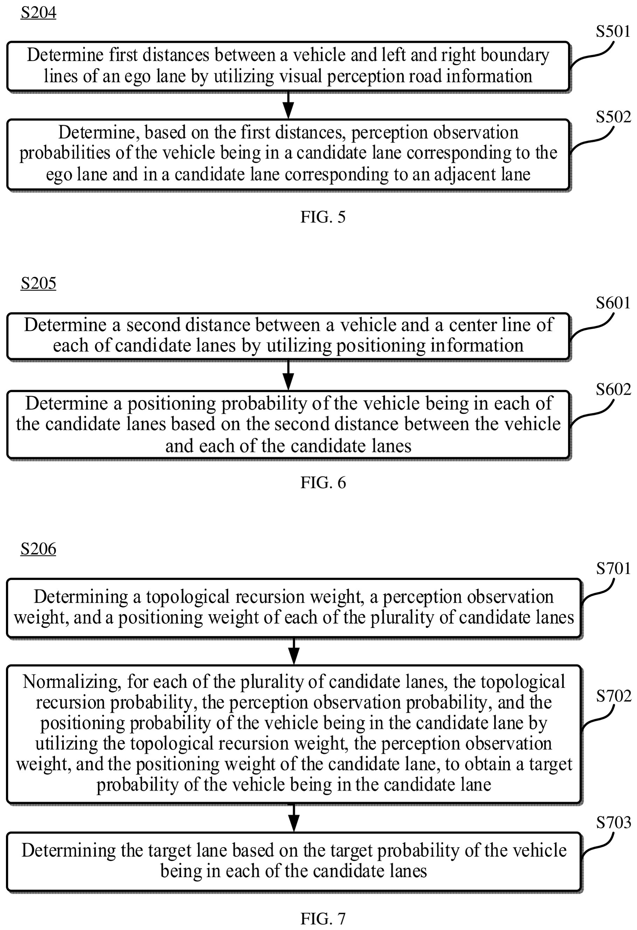

According to some embodiments, the visual perception road information may include a plurality of perceived lanes, and the plurality of perceived lanes may include an ego lane the vehicle is in and an adjacent lane. As shown in FIG. 5, step S204 of determining the perception observation probability of the vehicle being in each of the candidate lanes by utilizing the visual perception road information may include: step S501: determining first distances between the vehicle and left and right boundary lines of the ego lane by utilizing the visual perception road information; and step S502: determining, based on the first distances, perception observation probabilities of the vehicle being in a candidate lane corresponding to the ego lane and in a candidate lane corresponding to the adjacent lane.

As such, with the above method, the topological recursion probability of the vehicle being in each of the candidate lanes can be predicted from the dimension of road perception by effectively utilizing the visual perception road information, thereby improving the accuracy of lane-level positioning.

In some embodiments, in step S502, in response to determining that the first distances indicates that the vehicle is not close to any adjacent lane, a perception observation probability exceeding a first probability value may be set for the candidate lane corresponding to the ego lane, and a perception observation probability lower than a second probability value may be set for the candidate lanes corresponding to the adjacent lane. In response to determining that the first distances indicates that the vehicle is close to an adjacent lane, a perception observation probability exceeding the second probability value may be set for the candidate lane corresponding to the adjacent lane, and a perception observation probability lower than the first probability value may be set for the candidate lane corresponding to the ego lane.

According to some embodiments, as shown in FIG. 6, step S205 of determining the positioning probability of the vehicle being in each of the candidate lanes by utilizing the positioning information may include: step S601: determining a second distance between the vehicle and a center line of each of the candidate lanes by utilizing the positioning information; and step S602: determining the positioning probability of the vehicle being in each of the candidate lanes based on the second distance between the vehicle and each of the candidate lanes.

As such, with the above method, the positioning probability of the vehicle being in each of the candidate lanes can be predicted from the dimension of positioning by effectively utilizing the positioning information, thereby improving the accuracy of lane-level positioning.

In some embodiments, the center line of the candidate lane may be obtained from the map road information. In step S602, the determined positioning probability may be negatively correlated with the second distance. That is, the closer the vehicle is to the center line of a candidate lane, the higher the positioning probability corresponding to the candidate lane is.

In step S206, the topological recursion probability, the perception observation probability, and the positioning probability corresponding to each of the candidate lanes may be combined to obtain a target probability corresponding to the candidate lane. Then, the target lane in which the vehicle is most likely located can be determined based on the target probability of each of the candidate lanes.

In some embodiments, step S203 to step S206 described above may also be regarded as a process of probability confidence assignment.

According to some embodiments, as shown in FIG. 7, step S206 of determining the target lane the vehicle is in from the plurality of candidate lanes based on the topological recursion probability, the perception observation probability, and the positioning probability of the vehicle being in each of the candidate lanes may include: step S701: determining a topological recursion weight, a perception observation weight, and a positioning weight of each of the plurality of candidate lanes; step S702: normalizing, for each of the plurality of candidate lanes, the topological recursion probability, the perception observation probability, and the positioning probability of the vehicle being in the candidate lane by utilizing the topological recursion weight, the perception observation weight, and the positioning weight of the candidate lane, to obtain a target probability of the vehicle being in the candidate lane; and step S703: determining the target lane based on the target probability of the vehicle being in each of the candidate lanes

As such, with the above method, the topological recursion weight, the perception observation weight, and the positioning weight can be combined more effectively, thereby more accurately determining the target lane from the plurality of candidate lanes.

In some embodiments, the target probability may be expressed as:

$$P_{target} = L_{topological\ recursion} * P_{topological\ recursion} + L_{perception\ observation} * P_{perception\ observation}$$

$$+ L_{positioning} * P_{positioning}$$

where P represents probability, and L represents weight.

In some embodiments, the topological recursion weight, the perception observation weight, and the positioning weight may be set based on a priori knowledge, or may be dynamically adjusted.

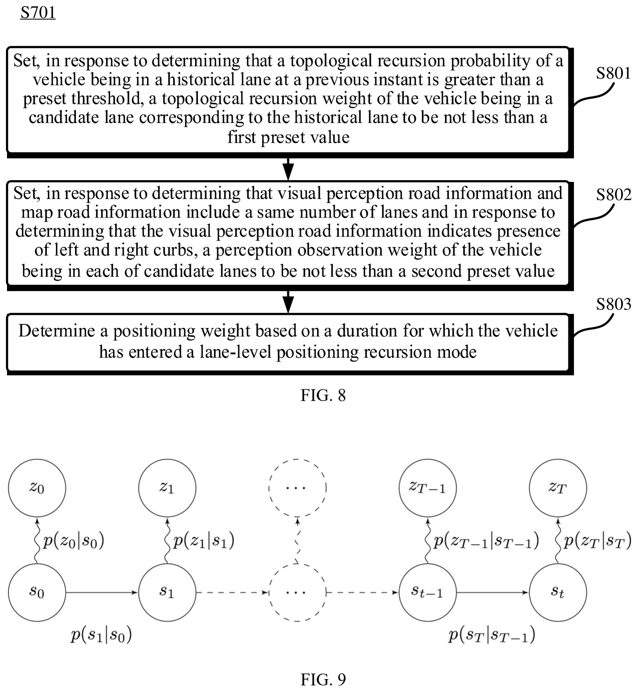

According to some embodiments, as shown in FIG. 8, step S701 of determining the topological recursion weight, the perception observation weight, and the positioning weight of each of the plurality of candidate lanes may include: step S801: setting, in response to determining that a topological recursion probability of the vehicle being in a historical lane at a previous instant is greater than a preset threshold, a topological recursion weight of the vehicle being in a candidate lane corresponding to the historical lane to be not less than a first preset value.

The topological recursion probability corresponding to the historical lane being greater than the preset threshold indicates that the confidence level for the topological recursion-based approach was high when lane-level positioning is performed in the historical lane. As a result, the weight of this approach may be set to a high value in subsequent predictions. In this way, lane-level positioning may rely more on the use of the topological recursion information.

In some embodiments, in response to determining that a topological recursion probability of the vehicle being in a historical lane at the previous instant is less than the preset threshold, a topological recursion weight of the vehicle being in a candidate lane corresponding to the historical lane is set to be less than the first preset value. In other words, if the confidence level of the topological recursion-based approach was low when lane-level positioning is performed in the historical lane, the corresponding weight may be reduced in subsequent predictions to reduce the use of the topological recursion information.

According to some embodiments, as shown in FIG. 8, step S701 of determining the topological recursion weight, the perception observation weight, and the positioning weight of each of the plurality of candidate lanes may include: step S802: setting, in response to determining that the visual perception road information and the map road information include a same number of lanes and in response to determining that the visual perception road information indicates presence of left and right curbs, the perception observation weight of the vehicle being in each of the candidate lanes to be not less than a second preset value.

When the visual perception result and the high-definition map include the same number of lanes and the left and right curbs of the current road are successfully detected, it is indicated that the confidence level of the current visual perception road information is high. As a result, a high weight may be set for the perception observation-based lane-level positioning approach, thereby improving the accuracy of lane-level positioning.

According to some embodiments, as shown in FIG. 8, step S701 of determining the topological recursion weight, the perception observation weight, and the positioning weight of each of the plurality of candidate lanes may include: step S803: determining the positioning weight based on a duration for which the vehicle has entered a lane-level positioning recursion mode, where the lane-level positioning recursion mode indicates a mode in which lane-level positioning is performed by utilizing the topological recursion probability, the perception observation probability, and the positioning probability, and the positioning weight is negatively correlated with the duration.

The mode in which lane-level positioning is performed by utilizing the topological recursion probability, the perception observation probability, and the positioning probability is the lane-level positioning recursion mode. This mode does not rely entirely on the positioning information and the map information, but enables comprehensive reasoning based on information from a plurality of sources. Step S201 to step S206 in FIG. 2 describe the lane-level positioning recursion mode. Since this mode relies less on the positioning information and the map information in, the longer the time since this mode has been entered, the lower the reliability of the recursion information. As a result, a small weight may be set to ensure the overall accuracy of lane-level positioning.

After step S206, a post-processing operation may be performed. In some embodiments, the post-processing operation may maintain a hidden Markov model (HMM) across multi-frame temporal results to implement temporal information transfer, and achieve spatial alignment of multi-source information (the positioning information, the map road information, and the visual perception road information) by utilizing the road topology of candidate links, so that the safety attribute of lane-level positioning post-processing is improved.

Hidden Markov model-based map matching has been established as the state-of-the-art method for both offline and online map matching. A first-order hidden Markov model defines the behavior of a system over time as a sequence of system states $(s_0, ..., s_T)$, which are hidden because actual system states can only be observed through a series of measurements $(z_0, ..., z_T)$. FIG. 9 is a schematic diagram of a hidden Markov model according to an example embodiment of the present disclosure. As shown in FIG. 9, each measurement $z_t$ is an observation result of a system state $s_t$ (as indicated by wavy arrows) at a time $t \in [0, t]$. The state $s_t$ at the time $t$ is one of many possible states in a finite set of state candidates $s_t$. Since observations are affected by the measurement noise, their uncertainties can be modeled by using likelihood probabilities $p(z_t|s_t)$. State transitions, as indicated by straight arrows, are part of a random process with a transition probability $p(s_t|s_{t-1})$.

The first-order HMM makes the following assumptions for state transitions and estimation:

- Markov state assumption: The system state $s_t$ at the time $t \in [1, t]$ depends only on a previous state $s_{t-1}$, so that $p(s_t|s_0,...,s_{t-1}) = p(s_t|s_{t-1})$.
- Markov sensor assumption: The likelihood probability of $z_t$ at the time $t \in [0, t]$ depends only on the current state $s_t$, so that $p(z_t|z_0,...,z_{t-1}, s_0,...,s_t) = p(z_t|s_t)$.

In the context of map matching, the state refers to a map position of the vehicle, and the estimator refers to a position measurement. The transitions between the system states correspond to paths between map positions. The solution to the online map matching problem follows a recursive method for state filtering.

A maximum likelihood position probability $\tilde{s}$ corresponds to the position measurement $z_t$:

According to the definition

$$\tilde{s} = \underset{s_t}{argmax}\, p(s_t \backslash z_0, \ldots, z_t)$$

it can be derived that,

$$p(s_t|z_0, \ldots, z_t) = \alpha p(z_t|s_t) \sum_{s_{t-1}}^{s_{t-1}} p(s_t|s_{t-1}) p(s_{t-1}|z_0, \ldots, z_{t-1})$$

In the formula, $p(s_t|z_0,...,z_t)$ is a probability of the position candidate $s_t \in S_t$, given position measurements $(z_0,..., z_t)$. In addition, $p(s_{t-1}|z_0,...,z_{t-1})$ is a probability of a position candidate $s_{t-1} \in S_{t-1}$, given position measurements $(z_0,...,z_{t-1})$. A likelihood probability of the position candidate $s_t$ is $p(z_t|s_t)$, a transition probability from the position $s_{t-1}$ to the position $s_t$ is $p$, and $\alpha$ is a normalization constant. A probability of an initial position candidate $s_0 \in S_0$ is:

$$p(s_0|z_0) = \alpha p(z_0|s_0)$$

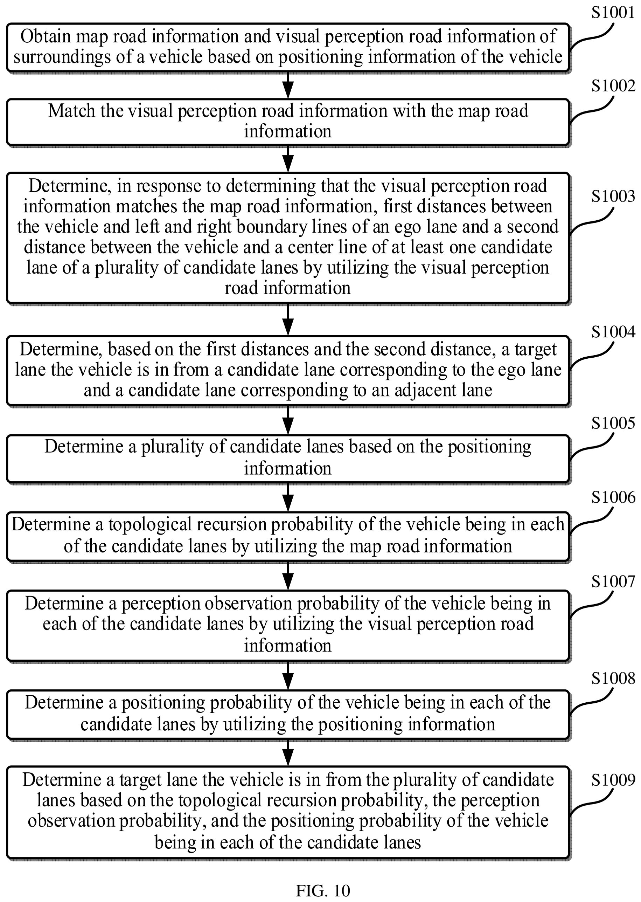

According to some embodiments, as shown in FIG. 10, the lane-level positioning method may further include: step S1002: matching the visual perception road information with the map road information. Determining the plurality of candidate lanes and the topological recursion probability, the perception observation probability, and the positioning probability corresponding to each of the candidate lanes may be performed in response to determining that the visual perception road information does not match the map road information. It can be understood that operations and effects of step S1001 and step S 1005 to step S1009 in FIG. 10 may refer to step S201 to step S206 in FIG. 2, and will not be described herein again.

The visual perception road information and the map road information may first be matched by a map matching module after they are obtained. If the match fails, the determination of the candidate lanes and the calculation of the topological recursion probability, the perception observation probability, and the positioning probability are triggered, and then these probabilities are used for lane-level positioning. In other words, if the visual perception road information and the map road information fail to match, the lane-level positioning recursion mode is entered.

In some embodiments, the visual perception road information includes visually perceived lane lines, and the map road information includes map lane lines. In step S 1002, matching point pairs may be provided through histogram filtering from the visual perception road information and the map road information, and high-definition availability information may be generated based on the matching point pairs. The high-definition availability information may include: 1) information about whether the visually perceived lane lines and the map lane lines are matched successfully; 2) information about whether a deviation of the visually perceived lane lines from the map lane lines is less than a threshold; 3) information about whether the ego vehicle has driven out of the road boundary; and 4) information about whether the vehicle is at a Y-shaped intersection.

In response to determining that at least one of the four conditions: 1) the visually perceived lane lines and the map lane lines being matched successfully, 2) the deviation being less than the preset deviation threshold, 3) the ego vehicle having not driven out of the road boundary, and 4) the vehicle being not at a Y-shaped intersection, is not satisfied, it can be considered that the visual perception road information does not match the map road information. Thus, step S 1005 to step S 1009 may be performed. That is, recursive lane-level positioning is performed by using multi-source sensors.

In response to determining that all the above four conditions are satisfied, it can be considered that the visual perception road information matches the map road information. Thus, lane positioning can be performed by using the high-definition map.

According to some embodiments, the visual perception road information may include a plurality of perceived lanes, and the plurality of perceived lanes may include an ego lane the vehicle is in and an adjacent lane. As shown in FIG. 10, the lane-level positioning method may further include: step S1003: determining, in response to determining that the visual perception road information matches the map road information, first distances between the vehicle and left and right boundary lines of the ego lane and a second distance between the vehicle and a center line of at least one candidate lane of the plurality of candidate lanes by utilizing the visual perception road information, the at least one candidate lane comprising at least a candidate lane corresponding to the ego lane; and step S1004: determining, based on the first distances and the second distance, the target lane the vehicle is in from the candidate lane corresponding to the ego lane and the candidate lane corresponding to the adjacent lane.

In some embodiments, road-level positioning involves more data computations and low frequency, while the downstream requires high frequency of lane-level positioning output. As a result, link information provided by road-level positioning may lag. Thus, it is necessary to perform an update determination for a successor lane, i.e., determine whether the ego vehicle has entered the successor lane by utilizing the lane topology relationship provided by the high-definition map and position information provided by fusion positioning, further confirming the ego lane in which the ego vehicle is currently located, thereby preventing lane determination errors caused by the lag of road-level positioning, and improving the robustness of lane calculation.

In some embodiments, the update determination for the successor lane may include: calculating left and right intercept distances of the ego vehicle from the boundary lines of the successor lane, and determining a possible ego lane based on opposite signs of the left and right intercept distances; and calculating an angle between the ego vehicle and a lane center line, where an acute angle indicates that the ego vehicle has entered the successor lane, so that the road information is updated accordingly.

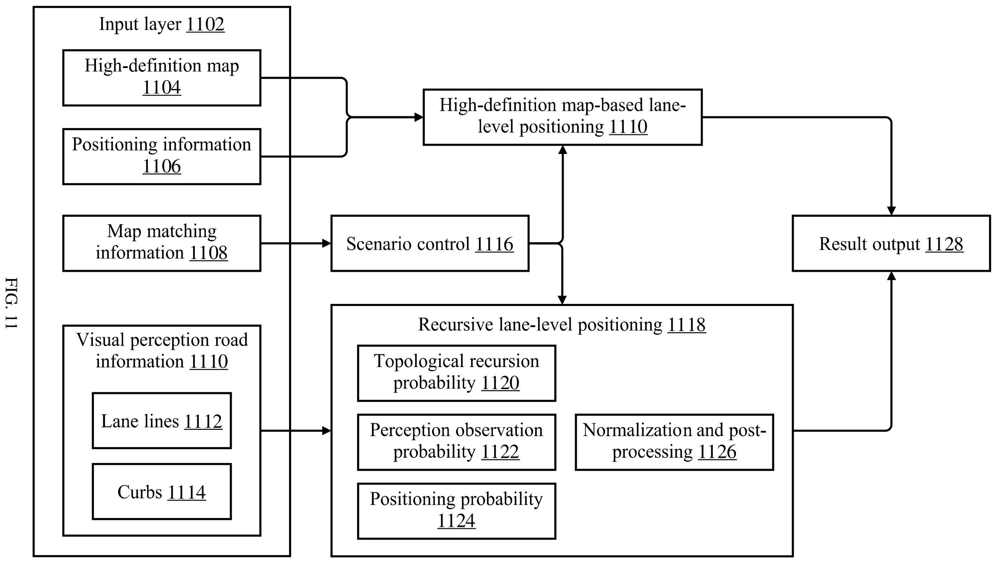

FIG. 11 is a flowchart of an overall technical process according to an example embodiment of the present disclosure. An input layer 1102 may include a high-definition map 1104, positioning information 1106, map matching information 1108, and visual perception road information 1110. The visual perception road information may further include lane lines 1112 and curbs 1114. Based on the map matching information 1108, scenario control 1116 may be performed, i.e., it is determined whether to perform high-definition map-based lane-level positioning 1110 or recursive lane-level positioning 1118 depending on the matching result. The recursive lane-level positioning 1118 further requires the calculation of a topological recursion probability 1120, a perception observation probability 1122, and a positioning probability 1124, on which normalization and post-processing 1126 are then performed. Finally, result output 1128 is performed after the high-definition map-based lane-level positioning 1110 or the recursive lane-level positioning 1118.

The method according to the present disclosure is described below in conjunction with an example embodiment.

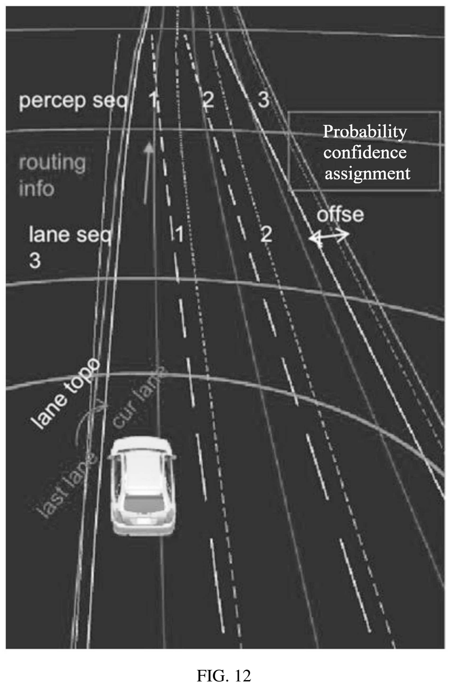

FIG. 12 is a schematic diagram of lane-level positioning according to an example embodiment of the present disclosure. White lane lines represent lane lines of a high-definition map, green lines represent center lines of lanes of the high-definition map, yellow lines represent visually perceived lane lines, and pink arcs respectively represent radial distances of 5 m, 10 m, and 50 m from the ego vehicle. As can be seen from the figure, the yellow lines show a significant deviation (high offset) from the white lines, indicating poor quality of the high-definition map. Accordingly, a map matching module outputs information indicating high-definition unavailability, and lane-level positioning enters the recursion mode.

In some embodiments, map road information may be obtained from the high-definition map based on positioning information output from road-level positioning. The map road information includes information about all lanes bound under the link, i.e., lane_seq 1-3 in the figure. These lanes may be determined as a plurality of candidate lanes. In addition, a predecessor/successor relationship of the lanes may be obtained based on the high-definition map near the ego vehicle.

In some embodiments, current visual perception road information may be obtained, including a plurality of perceived lanes, i.e., yellow percep_seq 1-3 in the figure. A lane change probability may be calculated, where the left or right lane change probability to is 0 at the position shown in the figure.

In some embodiments, topological recursion information may be obtained, where a lane topology relationship, i.e., lane_topo, is maintained by considering the link output from road-level positioning and the lag of road-level positioning, i.e., cur_lane (a candidate lane) and last_lane (a historical lane) in the figure. Then, probability confidence assignment may be performed to obtain a topological recursion probability, a perception observation probability, and a fusion positioning probability.

In some embodiments, with respect to the topological recursion probability and its weight calculation, since the lane change probability is 0, the probability state transition matrix is an identity matrix, and the weight is set based on a topological recursion probability used at a previous moment; and the lane change probability is calculated by using the formula described above.

In some embodiments, with respect to the perception observation probability and its weight calculation, when the current perception result and the high-definition map include a same number of lanes and left and right curbs are detected, the perception observation weight is set to a large value; and the ego vehicle is centered in the lane, with a large distance to left and right boundary lines, resulting in a probability of 1 for the ego lane and 0 for left or right lane.

In some embodiments, with respect to the fusion positioning probability and its weight calculation, since the ego vehicle has not left the map, road-level positioning has not entered the recursion mode, and the weight of the fusion positioning probability is set based only on the time since the ego vehicle has entered the lane-level positioning recursion mode, with a longer time resulting in a lower weight; and the fusion positioning probability is set based on the distance to the lane center line.

In some embodiments, normalization calculation may be performed according to the formula described above for the target probability, to obtain probabilities for all candidate lanes, and an identifier of the lane with the highest probability is provided as a final lane-level positioning output. Since the road-level positioning in this region has not entered the recursion mode, and it is not a ramp or tunnel scenario, no special post-processing is required.

The present disclosure provides an active lane-level positioning method, which can serve as an important supplement to a high-definition map-based lane-level positioning system in assisted driving systems. On the basis of the original framework, lane-level positioning recursive calculation is introduced to handle scenarios with poor high-definition map quality, improving the effectiveness in scenarios with bends and real-world changes. In conclusion, this lane-level positioning-related technique, as an important component of assisted driving technology, provides important technical support for the implementation of the assisted driving technology, and can achieve effects such as non-degraded passage through tunnel bends, no degradation with map convex hulls, no degradation in the case of a longitudinal error exceeding the map, and maintaining positioning effectiveness in the case of real-world changes. In addition, by using the method according to the present disclosure, in tunnel scenarios, the availability of intelligent driving is increased by 50% and the positioning effectiveness is increased by 42.9%; and in real-world change scenarios, the availability of intelligent driving is increased by 58.8% and the positioning effectiveness is increased by 70.6%; the problem of lane-level positioning failure and jumping at ramp junctions in regular scenarios is solved; and the multi-layer road misalignment problem is solved.

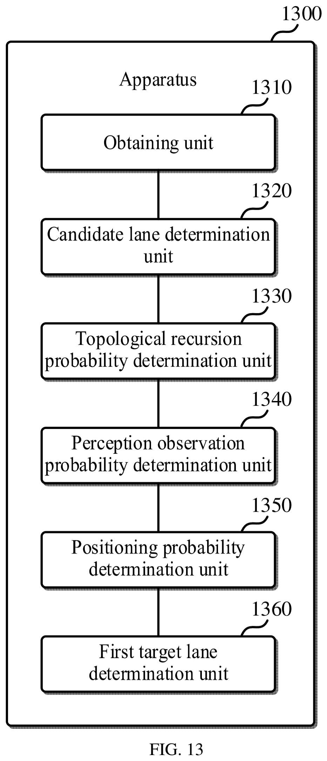

According to another aspect of the present disclosure, a lane-level positioning apparatus is provided. As shown in FIG. 13, the lane-level positioning apparatus 1300 includes: an obtaining unit 1310 configured to obtain map road information and visual perception road information of surroundings of a vehicle based on positioning information of the vehicle; a candidate lane determination unit 1320 configured to determine a plurality of candidate lanes based on the positioning information; a topological recursion probability determination unit 1330 configured to determine a topological recursion probability of the vehicle being in each of the candidate lanes by utilizing the map road information; a perception observation probability determination unit 1340 configured to determine a perception observation probability of the vehicle being in each of the candidate lanes by utilizing the visual perception road information; a positioning probability determination unit 1350 configured to determine a positioning probability of the vehicle being in each of the candidate lanes by utilizing the positioning information; and a first target lane determination unit 1360 configured to determine a target lane the vehicle is in from the plurality of candidate lanes based on the topological recursion probability, the perception observation probability, and the positioning probability of the vehicle being in each of the candidate lanes.

According to some embodiments, the topological recursion probability determination unit may include: a first determination subunit configured to determine a topological recursion relationship between a plurality of historical lanes and the plurality of candidate lanes by utilizing the map road information; and a second determination subunit configured to determine the topological recursion probability of the vehicle being in each of the candidate lanes based on the topological recursion relationship and a topological recursion probability of the vehicle being in each of the historical lanes at a previous instant.

According to some embodiments, the topological recursion probability determination unit may further include: a calculation subunit configured to calculate a lane change probability of the vehicle based on the visual perception road information; and a matrix maintenance subunit configured to maintain a state transition matrix for topological recursion observation based on the lane change probability. The topological recursion probability of the vehicle being in each of the candidate lanes may be determined based on the state transition matrix, the topological recursion relationship, and the topological recursion probability of the vehicle being in each of the historical lanes at the previous instant.

According to some embodiments, the visual perception road information includes a plurality of perceived lanes, the plurality of perceived lanes including an ego lane the vehicle is in and an adjacent lane. The perception observation probability determination unit may include: a third determination subunit configured to determine first distances between the vehicle and left and right boundary lines of the ego lane by utilizing the visual perception road information; and a fourth determination subunit configured to determine, based on the first distances, perception observation probabilities of the vehicle being in a candidate lane corresponding to the ego lane and in a candidate lane corresponding to the adjacent lane.

According to some embodiments, the positioning probability determination unit may include: a fifth determination subunit configured to determine a second distance between the vehicle and a center line of each candidate lane by utilizing the positioning information; and a sixth determination subunit configured to determine the positioning probability of the vehicle being in the candidate lane corresponding to the ego lane based on the second distance between the vehicle and each of the candidate lanes.

According to some embodiments, the target lane determination unit may include: a weight determination subunit configured to determine a topological recursion weight, a perception observation weight, and a positioning weight of each of the plurality of candidate lanes; a target probability determination subunit configured to normalize, for each of the plurality of candidate lanes, the topological recursion probability, the perception observation probability, and the positioning probability of the vehicle being in the candidate lane by utilizing the topological recursion weight, the perception observation weight, and the positioning weight of the candidate lane, to obtain a target probability of the vehicle being in the candidate lane; and a target lane determination subunit configured to determine the target lane based on the target probability of the vehicle being in each of the candidate lanes.

According to some embodiments, the weight determination subunit may include: a topological recursion weight determination subunit configured to set, in response to determining that a topological recursion probability of the vehicle being in a historical lane at a previous instant is greater than a preset threshold, a topological recursion weight of the vehicle being in a candidate lane corresponding to the historical lane to be not less than a first preset value.

According to some embodiments, the weight determination subunit may include: a perception observation weight determination subunit configured to set, in response to determining that the visual perception road information and the map road information comprise a same number of lanes and in response to determining that the visual perception road information indicates presence of left and right curbs, the perception observation weight of the vehicle being in each of the candidate lanes to be not less than a second preset value.

According to some embodiments, the weight determination subunit may include: a positioning weight determination subunit configured to determine the positioning weight based on a duration for which the vehicle has entered a lane-level positioning recursion mode, wherein the lane-level positioning recursion mode indicates a mode in which lane-level positioning is performed by utilizing the topological recursion probability, the perception observation probability, and the positioning probability, and the positioning weight is negatively correlated with the duration.

According to some embodiments, the lane-level positioning apparatus may further include: a matching unit configured to match the visual perception road information with the map road information. Determining the plurality of candidate lanes and the topological recursion probability, the perception observation probability, and the positioning probability corresponding to each of the candidate lanes may be performed in response to determining that the visual perception road information does not match the map road information.

According to some embodiments, the visual perception road information may include a plurality of perceived lanes, and the plurality of perceived lanes may include an ego lane the vehicle is in and an adjacent lane. The lane-level positioning apparatus may further include: a distance determination unit configured to determine, in response to determining that the visual perception road information matches the map road information, first distances between the vehicle and left and right boundary lines of the ego lane and a second distance between the vehicle and a center line of at least one candidate lane of the plurality of candidate lanes by utilizing the visual perception road information, the at least one candidate lane comprising at least a candidate lane corresponding to the ego lane; and a second determination unit configured to determine, based on the first distances and the second distance, the target lane the vehicle is in from the candidate lane corresponding to the ego lane and the candidate lane corresponding to the adjacent lane.

In the technical solutions of the present disclosure, collection, storage, use, processing, transmission, provision, disclosure, etc. of user personal information involved all comply with related laws and regulations and are not against the public order and good morals.

According to embodiments of the present disclosure, an electronic device, a readable storage medium, and a computer program product are further provided.

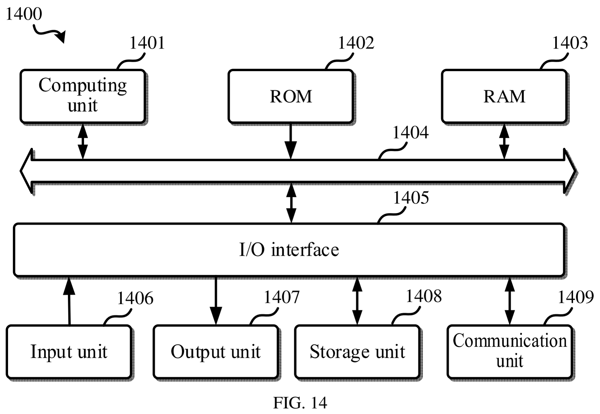

Referring to FIG. 14, a structural block diagram of an electronic device 1400 will be described below, which can serve as a server or a client of the present disclosure and is an example of a hardware device that can be applied to various aspects of the present disclosure. The electronic device is intended to represent various forms of digital electronic computer devices, such as a laptop computer, a desktop computer, a workstation, a personal digital assistant, a server, a blade server, a mainframe computer, and other suitable computers. The electronic device may further represent various forms of mobile apparatuses, such as a personal digital assistant, a cellular phone, a smartphone, a wearable device, and other similar computing apparatuses. The components shown in the present specification, their connections and relationships, and their functions are merely examples, and are not intended to limit the implementation of the present disclosure described and/or required herein.

As shown in FIG. 14, the device 1400 includes a computing unit 1401. The computing unit may perform various appropriate actions and processing according to a computer program stored in a read-only memory (ROM) 1402 or a computer program loaded from a storage unit 1408 into a random access memory (RAM) 1403. Various programs and data required for the operation of the device 1400 may also be stored in RAM 1403. The computing unit 1401, the ROM 1402, and the RAM 1403 are connected to each other through a bus 1404. An input/output (I/O) interface 1405 is also connected to the bus 1404.

A plurality of components in the device 1400 are connected to the I/O interface 1405, including: an input unit 1406, an output unit 1407, the storage unit 1408, and a communication unit 1409. The input unit 1406 may be any type of device capable of entering information to the device 1400. The input unit 1406 can receive entered digit or character information, and generate a key signal input related to user settings and/or function control of the electronic device, and may include, but is not limited to, a mouse, a keyboard, a touchscreen, a trackpad, a trackball, a joystick, a microphone, and/or a remote controller. The output unit 1407 may be any type of device capable of presenting information, and may include, but is not limited to, a display, a speaker, a video/audio output terminal, a vibrator, and/or a printer. The storage unit 1408 may include, but is not limited to, a magnetic disk and an optical disk. The communication unit 1409 allows the device 1400 to exchange information/data with other devices via a computer network such as the Internet and/or various telecommunications networks, and may include, but is not limited to, a modem, a network interface card, an infrared communication device, a wireless communication transceiver and/or a chipset, e.g., a Bluetooth™ device, a 802.11 device, a Wi-Fi device, a WiMax device, a cellular communication device and/or the like.

The computing unit 1401 may be various general-purpose and/or special-purpose processing components with processing and computing capabilities. Some examples of the computing unit 1401 include, but are not limited to, a central processing unit (CPU), a graphics processing unit (GPU), various dedicated artificial intelligence (AI) computing chips, various computing units that run machine learning network algorithms, a digital signal processor (DSP), and any appropriate processor, controller, microcontroller, etc. The computing unit 1401 performs the various methods and processing described above, for example, the lane-level positioning method. For example, in some embodiments, the lane-level positioning method may be implemented as a computer software program tangibly contained in a machine-readable medium, for example, the storage unit 1408. In some embodiments, part or all of the computer program may be loaded and/or installed onto the device 1400 via the ROM 1402 and/or the communication unit 1409. When the computer program is loaded into the RAM 1403 and executed by the computing unit 1401, one or more steps of the lane-level positioning method described above may be performed. Alternatively, in other embodiments, the computing unit 1401 may be configured, by any other appropriate means (for example, by means of firmware), to perform the lane-level positioning method.

Various implementations of the systems and technologies described herein above can be implemented in a digital electronic circuit system, an integrated circuit system, a field programmable gate array (FPGA), an application-specific integrated circuit (ASIC), an application-specific standard product (ASSP), a system-on-chip (SOC) system, a complex programmable logic device (CPLD), computer hardware, firmware, software, and/or a combination thereof. These various implementations may include implementation in one or more computer programs, where the one or more computer programs may be executed and/or interpreted on a programmable system including at least one programmable processor. The programmable processor may be a dedicated or general-purpose programmable processor that can receive data and instructions from a storage system, at least one input means, and at least one output means, and transmit data and instructions to the storage system, the at least one input apparatus, and the at least one output means.

Program codes used to implement the method of the present disclosure can be written in any combination of one or more programming languages. The program code may be provided for a processor or a controller of a general-purpose computer, a special-purpose computer, or other programmable data processing apparatuses, such that when the program code is executed by the processor or the controller, the functions/operations specified in the flowcharts and/or block diagrams are implemented. The program code may be completely executed on a machine, or partially executed on a machine, or may be, as an independent software package, partially executed on a machine and partially executed on a remote machine, or completely executed on a remote machine or a server.

In the context of the present disclosure, the machine-readable medium may be a tangible medium, which may contain or store a program for use by an instruction execution system, apparatus, or device, or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk drive, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

In order to provide interaction with a user, the systems and technologies described herein can be implemented on a computer which has: a display apparatus (for example, a cathode-ray tube (CRT) or a liquid crystal display (LCD) monitor) configured to display information to the user; and a keyboard and a pointing means (for example, a mouse or a trackball) through which the user can provide an input to the computer. Other categories of apparatuses can also be used to provide interaction with the user; for example, feedback provided to the user can be any form of sensory feedback (for example, visual feedback, auditory feedback, or tactile feedback); and an input from the user can be received in any form (including an acoustic input, a voice input, or a tactile input).

The systems and technologies described herein can be implemented in a computing system including a backend component (for example, as a data server), in a computing system including a middleware component (for example, an application server), in a computing system including a frontend component (for example, a user computer with a graphical user interface or a web browser through which the user can interact with the implementation of the systems and technologies described herein), or in a computing system including any combination of the backend component, the middleware component, and the frontend component. The components of the system can be connected to each other through digital data communication (for example, a communication network) in any form or medium. Examples of the communication network include: a local area network (LAN), a wide area network (WAN), and the Internet.

A computer system may include a client and a server. The client and the server are generally far away from each other and usually interact through a communication network. A relationship between the client and the server is generated by computer programs running on respective computers and having a client-server relationship with each other. The server may be a cloud server, which is also referred to as a cloud computing server or a cloud host, and is a host product in a cloud computing service system for overcoming defects of difficult management and weak business expansion in conventional physical hosts and virtual private server (VPS) services. The server may alternatively be a server in a distributed system, or a server combined with a blockchain.

It should be understood that steps may be reordered, added, or deleted based on the various forms of procedures shown above. For example, the steps recorded in the present disclosure may be performed in parallel, successively, or in a different order, provided that the desired result of the technical solutions disclosed in the present disclosure can be achieved, which is not limited herein.

Although the embodiments or examples of the present disclosure have been described with reference to the accompanying drawings, it should be appreciated that the method, system, and device described above are merely exemplary embodiments or examples, and the scope of the present disclosure is not limited by the embodiments or examples, but defined only by the granted claims and the equivalent scope thereof. Various elements in the embodiments or examples may be omitted or substituted by equivalent elements thereof. Moreover, the steps may be performed in an order different from that described in the present disclosure. Further, various elements in the embodiments or examples may be combined in various ways. It is important that, as the technology evolves, many elements described herein may be replaced with equivalent elements that appear after the present disclosure.

**Claims**

1. A computer-implemented lane-level positioning method, comprising:

obtaining(S201) map road information and visual perception road information of surroundings of a vehicle based on positioning information of the vehicle;

determining(S202) a plurality of candidate lanes based on the positioning information;

determining(S203) a topological recursion probability of the vehicle being in each of the candidate lanes by utilizing the map road information;

determining(S204) a perception observation probability of the vehicle being in each of the candidate lanes by utilizing the visual perception road information;

determining(S205) a positioning probability of the vehicle being in each of the candidate lanes by utilizing the positioning information; and

determining(S206) a target lane the vehicle is in from the plurality of candidate lanes based on the topological recursion probability, the perception observation probability, and the positioning probability of the vehicle being in each of the candidate lanes.

2. The method according to claim 1, wherein determining the topological recursion probability of the vehicle being in each of the candidate lanes by utilizing the map road information comprises:

determining a topological recursion relationship between a plurality of historical lanes and the plurality of candidate lanes by utilizing the map road information; and

determining the topological recursion probability of the vehicle being in each of the candidate lanes based on the topological recursion relationship and a topological recursion probability of the vehicle being in each of the historical lanes at a previous instant.

3. The method according to claim 2, wherein determining the topological recursion probability of the vehicle being in each of the candidate lanes by utilizing the map road information further comprises:

calculating a lane change probability of the vehicle based on the visual perception road information; and

maintaining a state transition matrix for topological recursion observation based on the lane change probability, wherein the topological recursion probability of the vehicle being in each of the candidate lanes is determined based on the state transition matrix, the topological recursion relationship, and the topological recursion probability of the vehicle being in each of the historical lanes at the previous instant.

4. The method according to any one of claims 1 to 3, wherein the visual perception road information comprises a plurality of perceived lanes, the plurality of perceived lanes comprising an ego lane the vehicle is in and an adjacent lane, and wherein determining the perception observation probability of the vehicle being in each of the candidate lanes by utilizing the visual perception road information comprises:

determining first distances between the vehicle and left and right boundary lines of the ego lane by utilizing the visual perception road information; and

determining, based on the first distances, perception observation probabilities of the vehicle being in a candidate lane corresponding to the ego lane and in a candidate lane corresponding to the adjacent lane.

5. The method according to any one of claims 1 to 4, wherein determining the positioning probability of the vehicle being in each of the candidate lanes by utilizing the positioning information comprises:

determining a second distance between the vehicle and a center line of each of the candidate lanes by utilizing the positioning information; and

determining the positioning probability of the vehicle being in each of the candidate lanes based on the second distance between the vehicle and each of the candidate lanes.

6. The method according to any one of claims 1 to 5, wherein determining the target lane the vehicle is in from the plurality of candidate lanes based on the topological recursion probability, the perception observation probability, and the positioning probability of the vehicle being in each of the candidate lanes comprises:

determining a topological recursion weight, a perception observation weight, and a positioning weight of each of the plurality of candidate lanes;

normalizing, for each of the plurality of candidate lanes, the topological recursion probability, the perception observation probability, and the positioning probability of the vehicle being in the candidate lane by utilizing the topological recursion weight, the perception observation weight, and the positioning weight of the candidate lane, to obtain a target probability of the vehicle being in the candidate lane; and
determining the target lane based on the target probability of the vehicle being in each of the candidate lanes.

7. The method according to claim 6, wherein determining the topological recursion weight, the perception observation weight, and the positioning weight of each of the plurality of candidate lanes comprises:
setting, in response to determining that a topological recursion probability of the vehicle being in a historical lane at a previous instant is greater than a preset threshold, a topological recursion weight of the vehicle being in a candidate lane corresponding to the historical lane to be not less than a first preset value.

8. The method according to claim 6, wherein determining the topological recursion weight, the perception observation weight, and the positioning weight of each of the plurality of candidate lanes comprises:
setting, in response to determining that the visual perception road information and the map road information comprise a same number of lanes and in response to determining that the visual perception road information indicates presence of left and right curbs, the perception observation weight of the vehicle being in each of the candidate lanes to be not less than a second preset value.

9. The method according to claim 6, wherein determining the topological recursion weight, the perception observation weight, and the positioning weight of each of the plurality of candidate lanes comprises:
determining the positioning weight based on a duration for which the vehicle has entered a lane-level positioning recursion mode, wherein the lane-level positioning recursion mode indicates a mode in which lane-level positioning is performed by utilizing the topological recursion probability, the perception observation probability, and the positioning probability, and the positioning weight is negatively correlated with the duration.

10. The method according to any one of claims 1 to 9, further comprising:
matching the visual perception road information with the map road information, wherein determining the plurality of candidate lanes and the topological recursion probability, the perception observation probability, and the positioning probability corresponding to each of the candidate lanes is performed in response to determining that the visual perception road information does not match the map road information.

11. The method according to claim 10, wherein the visual perception road information comprises a plurality of perceived lanes, the plurality of perceived lanes comprising an ego lane the vehicle is in and an adjacent lane, and wherein the method further comprises:

determining, in response to determining that the visual perception road information matches the map road information, first distances between the vehicle and left and right boundary lines of the ego lane and a second distance between the vehicle and a center line of at least one of the plurality of candidate lanes by utilizing the visual perception road information, the at least one candidate lane comprising at least a candidate lane corresponding to the ego lane; and
determining, based on the first distances and the second distance, the target lane the vehicle is in from the candidate lane corresponding to the ego lane and a candidate lane corresponding to the adjacent lane.

12. A lane-level positioning apparatus, comprising:

an obtaining unit (1310) configured to obtain map road information and visual perception road information of surroundings of a vehicle based on positioning information of the vehicle;
a candidate lane determination unit (1320) configured to determine a plurality of candidate lanes based on the positioning information;
a topological recursion probability determination unit (1330) configured to determine a topological recursion probability of the vehicle being in each of the candidate lanes by utilizing the map road information;
a perception observation probability determination unit (1340) configured to determine a perception observation probability of the vehicle being in each of the candidate lanes by utilizing the visual perception road information;
a positioning probability determination unit (1350) configured to determine a positioning probability of the vehicle being in each of the candidate lanes by utilizing the positioning information; and
a first target lane determination unit (1360) configured to determine a target lane the vehicle is in from the plurality of candidate lanes based on the topological recursion probability, the perception observation probability, and the positioning probability of the vehicle being in each of the candidate lanes.

13. The apparatus according to claim 12, wherein the topological recursion probability determination unit comprises:

**EP 4 760 210 A1**

a first determination subunit configured to determine a topological recursion relationship between a plurality of historical lanes and the plurality of candidate lanes by utilizing the map road information; and

a second determination subunit configured to determine the topological recursion probability of the vehicle being in each of the candidate lanes based on the topological recursion relationship and a topological recursion probability of the vehicle being in each of the historical lanes at a previous instant.

14. The apparatus according to claim 13, wherein the topological recursion probability determination unit further comprises:

a calculation subunit configured to calculate a lane change probability of the vehicle based on the visual perception road information; and

a matrix maintenance subunit configured to maintain a state transition matrix for topological recursion observation based on the lane change probability,

wherein the topological recursion probability of the vehicle being in each of the candidate lanes is determined based on the state transition matrix, the topological recursion relationship, and the topological recursion probability of the vehicle being in each of the historical lanes at the previous instant.

15. A non-transitory computer-readable storage medium storing computer instructions, wherein the computer instructions are used to cause a computer to perform the method according to any one of claims 1 to 11.

FIG. 1

FIG. 2

S203

Determine a topological recursion relationship between a plurality of historical lanes and a plurality of candidate lanes by utilizing map road information — S301

Calculate a lane change probability of a vehicle based on visual perception road information — S302

Maintain a state transition matrix for topological recursion observation based on a lane change probability — S303

Determine a topological recursion probability of the vehicle being in each of the candidate lanes based on the topological recursion relationship and a topological recursion probability of the vehicle being in each of the historical lanes at a previous instant — S304

FIG. 3

$$\hat{X}_0$$

$$P_0$$

$$K = 1$$

$$K = 1$$

$$\hat{X}_{k/k-1} = F_{k/k-1}\hat{X}_{k-1}$$

Time update

$$Q_{k-1}$$

$$P_{k/k-1} = F_{k/k-1}P_{k-1}F_{k/k-1}^{\mathrm{T}} + L_{k/k-1}Q_{k-1}L_{k/k-1}^{\mathrm{T}}$$

$$R_k$$

$$K = K + 1$$

$$Z_k$$

Measurement update

$$K_k = P_{k/k-1}H_k^{\mathrm{T}}(H_kP_{k/k-1}H_k^{\mathrm{T}} + R_k)^{-1}$$

$$K = K + 1$$

$$\hat{X}_k = \hat{X}_{k/k-1} + K_k(Z_k - H_k\hat{X}_{k/k-1})$$

$$P_k = (I - K_kH_k)P_{k/k-1}$$

$$\hat{X}_k$$

$$P_k$$

Filtering calculation loop

Gain calculation loop

FIG. 4

S204

| Determine first distances between a vehicle and left and right boundary lines of an ego lane by utilizing visual perception road information | S501 |

| Determine, based on the first distances, perception observation probabilities of the vehicle being in a candidate lane corresponding to the ego lane and in a candidate lane corresponding to an adjacent lane | S502 |

FIG. 5

S205

| Determine a second distance between a vehicle and a center line of each of candidate lanes by utilizing positioning information | S601 |

| Determine a positioning probability of the vehicle being in each of the candidate lanes based on the second distance between the vehicle and each of the candidate lanes | S602 |

FIG. 6

S206

| Determining a topological recursion weight, a perception observation weight, and a positioning weight of each of the plurality of candidate lanes | S701 |

| Normalizing, for each of the plurality of candidate lanes, the topological recursion probability, the perception observation probability, and the positioning probability of the vehicle being in the candidate lane by utilizing the topological recursion weight, the perception observation weight, and the positioning weight of the candidate lane, to obtain a target probability of the vehicle being in the candidate lane | S702 |

| Determining the target lane based on the target probability of the vehicle being in each of the candidate lanes | S703 |

FIG. 7

S701

| |
|---|
| Set, in response to determining that a topological recursion probability of a vehicle being in a historical lane at a previous instant is greater than a preset threshold, a topological recursion weight of the vehicle being in a candidate lane corresponding to the historical lane to be not less than a first preset value |

S801

| |
|---|
| Set, in response to determining that visual perception road information and map road information include a same number of lanes and in response to determining that the visual perception road information indicates presence of left and right curbs, a perception observation weight of the vehicle being in each of candidate lanes to be not less than a second preset value |

S802

S803

| |
|---|
| Determine a positioning weight based on a duration for which the vehicle has entered a lane-level positioning recursion mode |

FIG. 8

FIG. 9

Obtain map road information and visual perception road information of surroundings of a vehicle based on positioning information of the vehicle — S1001

Match the visual perception road information with the map road information — S1002

Determine, in response to determining that the visual perception road information matches the map road information, first distances between the vehicle and left and right boundary lines of an ego lane and a second distance between the vehicle and a center line of at least one candidate lane of a plurality of candidate lanes by utilizing the visual perception road information — S1003

Determine, based on the first distances and the second distance, a target lane the vehicle is in from a candidate lane corresponding to the ego lane and a candidate lane corresponding to an adjacent lane — S1004

Determine a plurality of candidate lanes based on the positioning information — S1005

Determine a topological recursion probability of the vehicle being in each of the candidate lanes by utilizing the map road information — S1006

Determine a perception observation probability of the vehicle being in each of the candidate lanes by utilizing the visual perception road information — S1007

Determine a positioning probability of the vehicle being in each of the candidate lanes by utilizing the positioning information — S1008

Determine a target lane the vehicle is in from the plurality of candidate lanes based on the topological recursion probability, the perception observation probability, and the positioning probability of the vehicle being in each of the candidate lanes — S1009

FIG. 10

FIG. 11

FIG. 12

1300

Apparatus                1310

Obtaining unit

1320

Candidate lane determination
unit

1330

Topological recursion
probability determination unit

1340

Perception observation
probability determination unit

1350

Positioning probability
determination unit

1360

First target lane
determination unit

FIG. 13

1400

1401 Computing unit

1402 ROM

1403 RAM

1404

1405 I/O interface

1406 Input unit

1407 Output unit

1408 Storage unit

1409 Communication unit

FIG. 14

**EUROPEAN SEARCH REPORT**

Application Number

EP 25 22 0743

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/328793 A1 (FU JUNSHENG [SE] ET AL) 3 October 2024 (2024-10-03) | 1,2,4-6, 10-13,15 | INV. G01C21/30 |
| A | * paragraphs [0035], [0068]; claims 1, 9 * | 3,7-9,14 | G01C21/36 G06V20/56 |
| | ----- | | |

**TECHNICAL FIELDS SEARCHED (IPC)**

G01C
G06F
G06V

The present search report has been drawn up for all claims

| Place of search | Date of completion of the search | Examiner |
|---|---|---|
| The Hague | 31 March 2026 | Kuhn, Robert |

EPO FORM 1503 03.82 (P04C01)

## ANNEX TO THE EUROPEAN SEARCH REPORT
## ON EUROPEAN PATENT APPLICATION NO.

EP 25 22 0743

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2026

| Patent document cited in search report | Publication date | Patent family member(s) | | Publication date |
|---|---|---|---|---|
| US 2024328793 A1 | 03-10-2024 | CN | 118732001 A | 01-10-2024 |
| | | EP | 4439014 A1 | 02-10-2024 |
| | | US | 2024328793 A1 | 03-10-2024 |

EPO FORM P0459

For more details about this annex : see Official Journal of the European Patent Office, No. 12/82